# EUROPEAN PATENT APPLICATION

(11) **EP 1 708 393 A2**
(43) Date of publication of application: **04.10.2006**
(21) Application number: 06007040.6
(22) Date of filing: 03.04.2006
(51) Int. Cl.: H04H 1/00

(54) **File distribution method and apparatus in a mobile broadcast system**

(30) Priority: 02.04.2005 KR 20050027838
(71) Applicant: Samsung Electronics Co., Ltd., Suwon-si, Gyeonggi-Do (KR)
(72) Inventor: Jung, Bo-Sun, Yeongtong-gu Suwon-si Gyeonggi-do (KR); Hwang, Sung-Oh, Yeongtong-gu Suwon-si Gyeonggi-do (KR); Kim, Eun-Jung, Yeongtong-gu Suwon-si Gyeonggi-do (KR); Lee, Ji-Hye, Yeongtong-gu Suwon-si Gyeonggi-do (KR)
(74) Representative: Lang, Johannes

(57) **Abstract**

A system and method are provided for providing a broadcast service (BCAST) in a mobile broadcast system. The system and method include a file application function (FA) that provides a file attribute related to the broadcast service, receives at least one file to be provided to at least one terminal and attribute information for the file, and delivers the received file and attribute information to a file delivery function (FD) in a BCAST service distribution/adaptation (BSD/A). The FD generates at least one bundle of files using the at least one received file based on service configuration information of a file transmitted from a BCAST subscription management (BSM) that manages subscriber information of the terminal, and generates a BCAST file including the at least one file or one bundle of files. The FD negotiates with a BDS service distribution (BDS-SD) that controls the BDS and the interaction network, using configuration information for the BCAST file to set up a bearer for delivering the generated BCAST file. After completion of setting up the bearer, the FD delivers the BCAST file to a terminal subscribed to the broadcast service.

## Description

### BACKGROUND OF THE INVENTION

### Field of the Invention:

The present invention relates generally to a mobile broadcast system supporting Broadcast Service (BCAST). In particular, the present invention relates to a method and apparatus for simultaneously delivering a file or a bundle of files to a plurality of terminals in a mobile broadcast system.

### Description of the Related Art:

Due to recent developments of communication and broadcast technologies, broadcast systems or mobile communication systems attempt to provide broadcast services to terminals with mobility, and there is lively discussion regarding not only common broadcast service limited to voice and image data, but also regarding service that is capable of transmitting packet data over a broadcast channel. Herein, services of the two types will be referred to as mobile broadcast service, and a system supporting mobile broadcast service will be referred to as a mobile broadcast system.

The Open Mobile Alliance (OMA), an organization for studying the standard for interaction between individual mobile solutions, mainly serves to establish various application standards for mobile games, Internet services, and so forth. In particular, the Open Mobile Alliance Browser and Content Mobile Broadcast Sub Working Group (OMA BAC BCAST) among OMA working groups is studying technology for providing broadcast service using mobile terminals. Additional details of this work is described in a text entitled "Mobile Broadcast Services Architecture, Draft Version 1.0-10 March 2006", published by the Open Mobile Alliance Ltd., 2005, the entire disclosure of which is hereby incorporated by reference.

In the mobile broadcast system under discussion in the OMA, the step in which mobile broadcast service is achieved may include processes of discovering services by mobile terminals for broadcast service, subscribing to the services by the mobile terminals, providing various control information to receive the services, transmitting the services, and receiving the services by the terminals. A description will now be made of the mobile broadcast system which is now under discussion in the OMA.

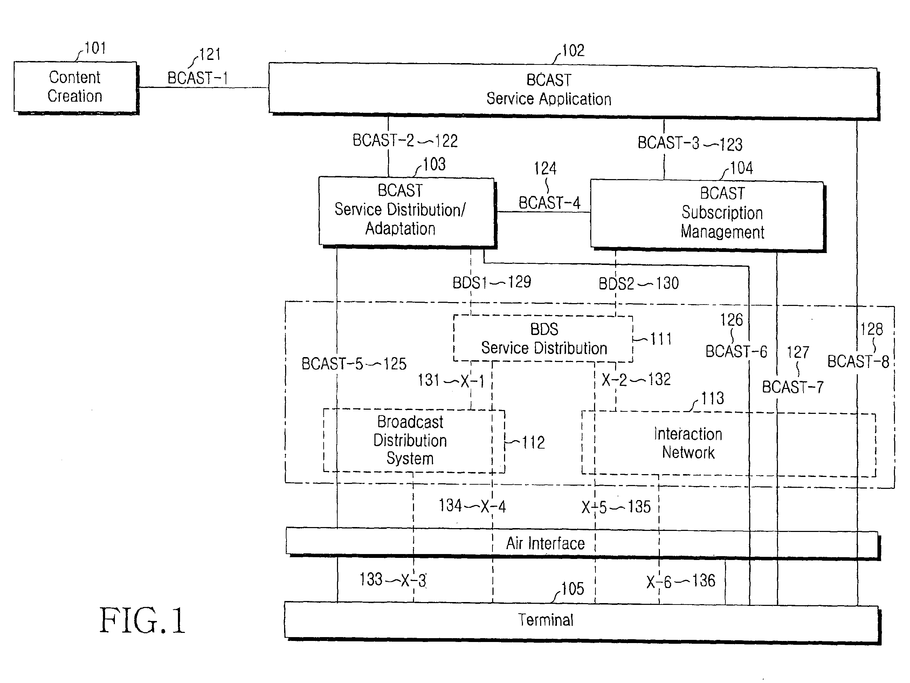

FIG. 1 is a diagram illustrating a logical configuration of a mobile broadcast system proposed in the BCAST Working Group of the OMA. Specifically, FIG. 1 illustrates an application layer and its lower transport layer and network layer in the mobile broadcast system.

In the OMA BCAST, the technical fields and functions being discussed for mobile broadcast service include a service guide for discovering mobile broadcast service, service recovery, streaming and file distribution, service and content protection, service provisioning, interaction between a mobile broadcast network and a cellular network, and notification that is capable of indicating a start of the mobile broadcast service and a change in the mobile broadcast service. These functions are located in BCAST logical entities shown in FIG. 1 by way of example. A description of the logical entities and interfaces shown in FIG. 1 is made with reference to Table 1 and Table 2 below. Table 1 and Table 2 describe, by way of example, entity names and functions (or roles) of exemplary elements used in the following descriptions.

**Table 1**

| No. | Entity name | Role |
|---|---|---|
| 102 | BCAST Service Application (BSA) | Represents the service application of the BCAST Service, such as streaming audio/video or movie file download. It encompasses the functionality of media encoding, content protection and interaction related to BCAST Service. It also provides the BCAST service BCAST Service attributes to the BCAST Service Distribution/Adaptation and BCAST Subscription Management. It may generate charging information, for example, according to the user charging information that it obtains from the BCAST subscription management and the content creator. Legacy mechanisms may be used for charging information generation and delivery. |
| 103 | BCAST Service Distribution/Adaptatio n (BSD/A) | Responsible for the aggregation and delivery of BCAST Services, and performs the adaptation of the BCAST Enabler to underlying Broadcast Distribution Systems. It provides the functionality of File and Stream Distribution, Service Aggregation, Service Protection, Service Guide generation and delivery, Notification Delivery, and the adaptation to the underlying BDS. The functionality of adaptation to each BDS may vary depending on the underlying BDS. |
| 104 | BCAST Subscription Management (BSM) | Responsible for service provisioning such as subscription and payment related functions, the provision of information used for BCAST Service reception, and BCAST Terminal management. It provides the functionality of Notification, Service Protection management, Content Protection management, Service Guide generation support, Terminal Provisioning and interaction with the BDS Service Distribution to communicate/manage subscription information with the Terminal. It may send the user charging information to the BCAST service application. |
| 105 | Terminal | The user device that receives broadcast content as well as the BCAST service related information, such as, service guide, and content protection information. The user device may support the interactive channel in which case it would be able to directly communicate to the network regarding the available services. |
| 101 | Content Creation (CC) | Source of content, may provide support for delivery paradigms (e.g. streaming servers), and provides base material for content descriptions. |
| 111 | BDS Service Distribution | Responsible for the coordination and delivery of broadcast services to the BDS for delivery to the terminal, including file and stream distribution, and Service Guide distribution. It may also include key distribution, broadcast subscription management, and accounting functions. BDS Service Distribution may not exist in certain BDSs. In that case it would be considered a "Null Function". It works with the interactive network to perform service discovery, BDS-specific service protection and handles other interaction functions. It also works with the BDS for content delivery to the terminal. |
| 112 | Broadcast Distribution System (BDS) | Specific support for the distribution of content over the broadcast channel. This may involve the same or different radio network from that used by the interactive channel. |
| 113 | Interaction Network | Specific support for the interaction channel. This may involve the same or different radio network from that used by the broadcast channel. |

**Table 2**

| No. | Reference point name | Usage |
|---|---|---|
| 121 | BCAST-1 | Content, Content attributes, notification event, and so forth. |
| 122 | BCAST-2 | Content-unprotected and/or content-protected BCAST Service, BCAST Service attributes and content attributes. |
| 123 | BCAST-3 | BCAST Service attributes and content attributes, User preference and subscription information, User request, User reporting, notification event and maybe user charging information. |
| 124 | BCAST-4 | Notification, Service Guide, fragments (related to provisioning, purchasing, subscription, terminal provisioning, and so forth), Service keys, Terminal Provisioning object, Terminal Provisioning message, Terminal management message, and so forth. |
| 125 | BCAST-5 | Unprotected and/or protected BCAST Service, content-unprotected and/or content-protected BCAST Service, BCAST Service attributes and content attributes, Notification, Service Guide, Security material, all of which are distributed over the Broadcast Distribution System. |
| 126 | BCAST-6 | Unprotected and/or protected BCAST Service, content-unprotected and/or content-protected BCAST Service, BCAST Service attributes and content attributes, Notification, Service Guide, Security material, terminal reports related to stream and file delivery, all distributed over the Interaction Network. |
| 127 | BCAST-7 | Service provisioning, Subscription information, Terminal provisioning, Security material and device registration. |
| 128 | BCAST-8 | User interaction, reporting, and user preference. |
| 129 | BDS1 | Unprotected and/or protected BCAST Service, content-unprotected and/or content- protected BCAST Service, BCAST Service attributes and content attributes, BDS-specific attributes, Notification and Service Guide fragments. Note: Service protection or Content Protection of RTP streams may be employed by the BDS itself, if available. |
| 130 | BDS2 | Service provisioning, Subscription information, Device management, and Security material. |
| 131 | X-1 | Reference Point between BDS Service Distribution and BDS. |
| 132 | X-2 | Reference Point between BDS Service Distribution and Interaction Network. |
| 133 | X-3 | Reference Point between BDS and Terminal. |
| 134 | X-4 | Reference Point between BDS Service Distribution and Terminal over Broadcast Channel. |
| 135 | X-5 | Reference Point between BDS Service Distribution and Terminal over Interaction Channel. |
| 136 | X-6 | Reference Point between Interaction Network and Terminal. |

In the descriptions of Table 2, 'reference point' indicates a connection path between two particular logical entities and can have a plurality of interfaces according to its object. The interfaces are used for communication between two or more functional entities for a particular object, and message types and protocols for the object are used therefor.

Among the various functions of the OMA BCAST, a File Distribution Function serves to deliver a file or a bundle of files with various media types and various encoding schemes to terminals. Although a broadcast channel is mainly used for file distribution, an interaction channel may also be used for file distribution when there are a small number of terminals to which the file or the bundle of files is to be delivered.

The File Distribution Function can use the functions defined in another OMA BCAST, and can encrypt the file or file bundle by the schemes provided in the Content Protection or Service Protection Function. The File Distribution Function can be provided with a broadcast-based error resilience function such as Forward Error Correction (FEC), and can also be provided with a post-delivery scheme such as file repair over iterative session.

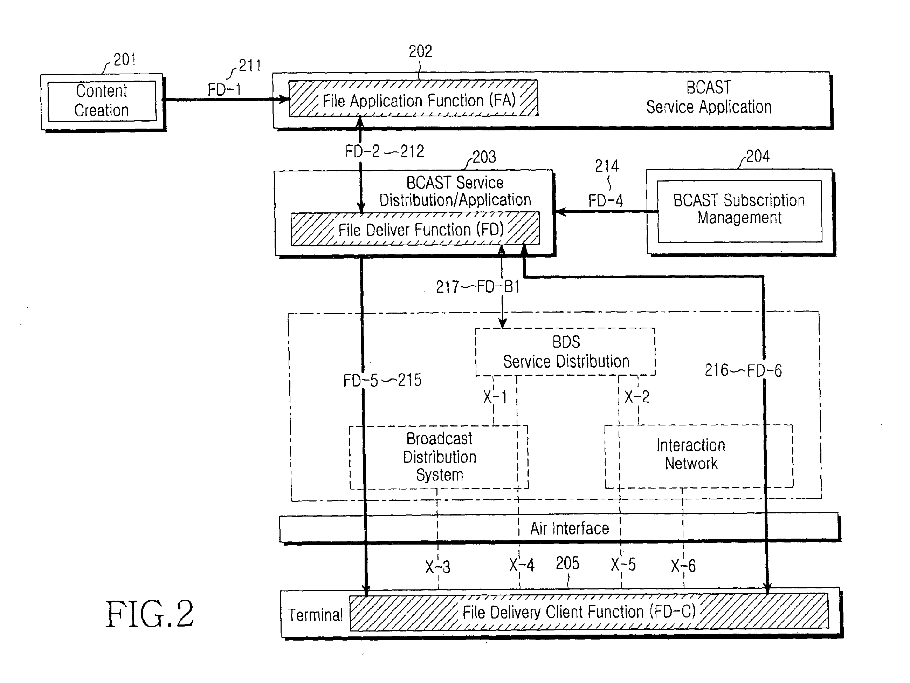

FIG. 2 is a diagram illustrating a File Distribution Architecture defined in the OMA BCAST.

Referring to FIG. 2, blocks related to file distribution include functional entities of a File Application Function (FA) 202, a File Delivery Function (FD) 203, and a File Deliver Client Function (FD-C) 205.

The FA 202, included in the BSA, receives the file or file bundle broadcast from a Content Creation (CC) 201 and delivers not only the file but also file attribute and additional information to a BCAST Service Distribution/Adaptation (BSD/A). The FA 202 is not limited in the type and encoding scheme of the file delivered through an FD-1 interface 211. If Content Protection is achieved by the BCAST, the FA 202 can cooperate with a Content Protection Function to encrypt the file. The FA 202 provides file attribute and location information such as the type and valid period of the file and additional information such as user profile and preference, for BCAST service.

The FD 203 is responsible for the delivery, aggregation and adaptation of a file or bundle of files. The FD 203 receives not only the file and file bundle, but also a file with attribute from the FA 202 via an FD-2 interface 212. File delivery may take place in one of the following modes.
- BDS Transparent Mode: Using configured attributes and attributes received from the FA 202, the FD 203 negotiates the bearers to be used for file distribution in cooperation with the BDS Service Distribution (BDS-SD) through an FD-B1 interface 217. If the BDS-SD does not exist, then an X-1 or X-2 interface can be used. The FD 203 normally delivers IP flows (containing a file or bundle of files) to terminals via an FD-5 interface 215. If the FD 203 receives a request for retransmission or error reporting from the terminal, the FD 203 may transmit parts of a file or parts of a bundle of files over an interaction channel via FD-6 216.
- BDS assisted mode: The FD 203 can also deliver IP flows (containing a file or a bundle of files) to the BDS via FD-B1 217. Thereafter, the BDS-SD distributes a file or a bundle of files to the terminal.

The FD 203 can aggregate files transmitted from different FAs according to provisioning information and adapt a file or a bundle of files for the BDS.

In the BDS transparent mode, the FD 203 takes responsibility for error efficient and error resilient file delivery. Consequently, the FD 203 may employ different schemes for improving file delivery success such as repetition and forward error correction (FEC). Further, in certain scenarios, the FD 203 may support file-repair functions.

In addition, the FD 203 may cooperate with the Service Protection Function to encrypt the bearer to be used for file delivery. If a file generated by the BCAST Subscription Management (BSM) needs to be transmitted over an FD-5 interface 215 or an FD-6 interface 216, then the FD 203 receives the corresponding file through an FD-4 interface 214.

The FD-C 205 in the terminal is responsible for receiving a file or bundle of files over a broadcast channel or an interaction channel through either an FD-5 interface 215 or an FD-6 interface 216. If the service protection is done by the BCAST, the FD-C 205 may cooperate with the Service Protection Function to decrypt the bearer containing the file. If the content protection is done by the BCAST, the FD-C 205 may cooperate with the Content Protection Function to decrypt the file. In the BDS transparent mode, the FD-C 205 should be able to receive the FD transmission as it is coded for error resilience. The FD-C 205 forwards the information about file to a relevant function. For post error recovery, the terminal may be able to request missing parts of encoded files in order to fully reconstruct the delivered files. In addition, the FD-C 205 may send a report of fully or partially received files or file bundles if the terminal has the interaction ability.

A description of the interfaces illustrated in FIG. 2 is given in Table 3 below by way of example. In Table 3, a description of only the parts necessary in embodiments of the present invention is given, and a description of additional or unnecessary parts is omitted.

**Table 3**

| No. | Interface | Reference point | Description |
|---|---|---|---|
| 211 | FD- 1 | BCAST-1 | Delivery of a file, whose type and encoding scheme may be agnostic to BCAST Standard. |
| 212 | FD-2 | BCAST-2 | Delivery of a file (or files) or a content protected file (or files) to FD; and Delivery of an attribute of a file (or files) to FD. |
| 214 | FD-4 | BCAST-4 | Delivery of a message or a data to be transmitted over FD-5 or FD-6. The example of a message or a data can be notification or service guide. |
| 215 | FD-5 | BCAST-5 | Unidirectional delivery of a file or a bundle of files some of which may be content protected. Unidirectional delivery of a content and service protected file or a bundle of files. Unidirectional delivery of in-band signaling for File Distribution (e.g. signaling used for file reception). |
| 216 | FD-6 | BCAST-6 | Point-to-point delivery of file parts needed in order to reconstruct a complete file or file bundle on the terminal side following reception of file parts over the broadcast channel; Point-to-Point delivery of a file or a bundle of files; and Delivery of a request or a report about file repairing from Terminal. |
| 217 | FD-B1 | BDS-1 | Delivery of a file or a bundle of files to BDS; Delivery of a service and/or content protected file or a bundle of files to BDS; Delivery of attribute of a file or a bundle of files to determine bearers used for file distribution; and Delivery of bearer information used for a file or bundle of files distribution. |

As described with reference to FIG. 2, a definition of only the functional entities for file distribution is provided, and there is no definition of (i) how to actually perform file distribution, (ii) which control messages should be transmitted between functional entities for actual file distribution, and (iii) how the functions to be provided in the File Distribution Function should be realized in detail.

Accordingly, a need exists for a system and method for defining the functional entities for file distribution, and further defining how to actually perform file distribution, which control messages should be transmitted between functional entities for actual file distribution, and how the functions to be provided in the File Distribution Function should be realized.

### SUMMARY OF THE INVENTION

It is, therefore, an object of embodiments of the present invention to substantially solve the above and other problems, and provide a method for efficiently delivering at least one file in a mobile broadcast system, and a system thereof.

It is another object of embodiments of the present invention to provide a method for delivering at least one file over a broadcast channel or an interaction channel according to circumstances in a mobile broadcast system, and a system thereof.

It is another object of embodiments of the present invention to provide a method in which upon receiving at least one file, a terminal can send a retransmission request for the received file in a mobile broadcast system, and a system thereof.

It is yet another object of embodiments of the present invention to provide a method in which upon receiving at least one file, a terminal can send a reception report for the received file in a mobile broadcast system, and a system thereof.

It is still another object of embodiments of the present invention to provide a method in which an OMA BCAST delivers at least one file to the BDS and the BDS reconstructs the file in the way supported by the BDS and delivers it to a plurality of terminals in a mobile broadcast system, and a system thereof.

It is still another object of embodiments of the present invention to provide a method for delivering a transmission start of at least one file to a plurality of terminals in a mobile broadcast system, and a system thereof.

According to one aspect of embodiments of the present invention, a method is provided for providing a broadcast service (BCAST) in a mobile broadcast system that receives contents of broadcast services from a content creation and provides the broadcast services to at least one terminal or at least one group of terminals via one of a broadcast distribution system (BDS) and an interaction network. The method comprises the steps of receiving, by a file application function (FA) that provides a file attribute related to the broadcast service, at least one file to be provided to at least one terminal and attribute information for the file, from the content creation, and then delivering the received file and attribute information to a file delivery function (FD) in a BCAST service distribution/adaptation (BSD/A). The method further comprises generating, by the FD, at least one bundle of files using the at least one received file based on service configuration information of a file transmitted from a BCAST subscription management (BSM) that manages subscriber information of the terminal, and generating a BCAST file including the at least one file or one bundle of files, and negotiating, by the FD, with a BDS service distribution (BDS-SD) that controls the BDS and the interaction network, using configuration information for the BCAST file to set up a bearer for delivering the generated BCAST file. The method still further comprises, after completion of setting up the bearer, delivering by the FD the BCAST file to a terminal subscribed to the broadcast service.

According to another aspect of embodiments of the present invention, a mobile broadcast system is provided that receives contents of broadcast services (BCAST) from a content creation and provides the broadcast services to at least one terminal or at least one group of terminals via one of a broadcast distribution system (BDS) and an interaction network. The system comprises a file application function (FA) for receiving at least one file to be provided to at least one terminal and attribute information for the file, from the content creation, performing content protection on the at least one file, and delivering the content-protected at least one file and the attribute information for the file to the terminal. The system further comprises a file delivery function (FD) for generating a BCAST file such that it can deliver the at least one received file based on service configuration information of a file transmitted from a BCAST subscription management (BSM) that manages subscriber information of the terminal, negotiating with a BDS service distribution (BDS-SD) that controls the BDS and the interaction network to set up a bearer for delivering the generated BCAST file, performing service protection on the bearer such that a terminal not subscribed to the broadcast service cannot receive the BCAST file, and then delivering the BCAST file to a terminal subscribed to the broadcast service.

### BRIEF DESCRIPTION OF THE DRAWINGS

The above and other objects, features and advantages of embodiments of the present invention will become more apparent from the following detailed description when taken in conjunction with the accompanying drawings, in which:
FIG. 1 is a diagram illustrating a logical configuration of a mobile broadcast system proposed in the BCAST Working Group of OMA;
FIG. 2 is a diagram illustrating a File Distribution Architecture defined in the OMA BCAST;
FIG. 3 is a signal flow diagram illustrating an exemplary process of delivering a file over a broadcast channel in a mobile broadcast system according to a first embodiment of the present invention;
FIG. 4 is a signal flow diagram illustrating an exemplary process of processing a corresponding operation using a broadcast channel when a terminal receiving OMA BCAST file service sends a retransmission request in a mobile broadcast system according to an embodiment of the present invention;
FIG. 5 is a signal flow diagram illustrating an exemplary process of processing a corresponding operation using an interaction channel when a terminal receiving OMA BCAST file service sends a retransmission request in a mobile broadcast system according to an embodiment of the present invention;
FIG. 6 is a signal flow diagram illustrating another exemplary process of processing a corresponding operation using an interaction channel when a terminal receiving OMA BCAST file service sends a retransmission request in a mobile broadcast system according to an embodiment of the present invention;
FIGs. 7, 8 and 9 are signal flow diagrams illustrating exemplary terminal report processes in a mobile broadcast system according to an embodiment of the present invention; and
FIG. 10 is a signal flow diagram illustrating an exemplary process of delivering a file over a broadcast channel in a mobile broadcast system according to a second embodiment of the present invention.

Throughout the drawings, like reference numerals will be understood to refer to like parts, components and structures.

### DETAILED DESCRIPTION OF EXEMPLARY EMBODIMENTS

Exemplary embodiments of the present invention will now be described in detail with reference to the annexed drawings. In the following description, a detailed description of known functions and configurations incorporated herein has been omitted for clarity and conciseness.

Embodiments of the present invention propose a message sequence chart related to efficient and stable delivery of a file or a bundle of files, a user report and error recovery in file distribution in a mobile broadcast system.

In particular, embodiments of the present invention propose a method for delivering a file distribution-related message based on the OMA File Distribution Architecture as shown in FIG. 2.

In the following description, the present invention will present a typical message sequence chart according to embodiments of the present invention. For convenience, the entities and names defined in 3GPP which is a standard organization for the asynchronous mobile communication, or OMA which is a standard organization for mobile application will be used herein, but embodiments of the present invention are not limited thereto.

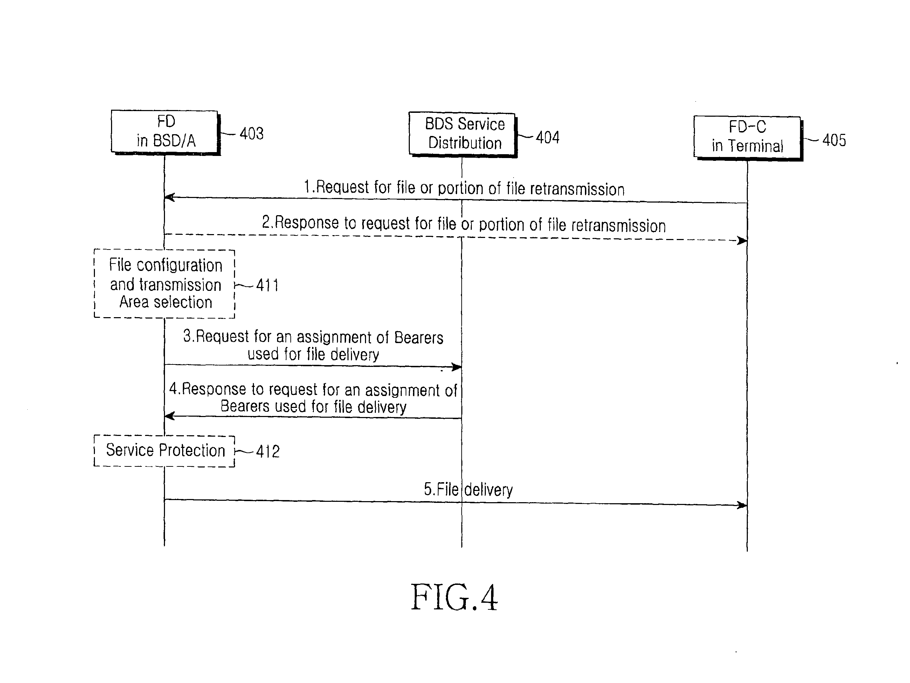

FIG. 3 is a signal flow diagram illustrating an exemplary process of delivering a file over a broadcast channel in a mobile broadcast system according to a first embodiment of the present invention. It is assumed for example, that CC, BSA, BSD/A, BDS-SD, and terminal perform the functions substantially as described in Table 1, and the FA, FD, and FD-C perform the functions described in the File Distribution Architecture. In addition, it should be noted in the signal flow diagram that the parts shown by a solid line represent mandatory operations, while the parts shown by a dotted line represent optional operations.

Referring to FIG. 3, a Content Creation (CC) 301 delivers a file attribute to an FA 302 along with at least one file to provide file distribution service to a terminal in step 1. The FA 302 performs a Content Protection Function 310 for the received file when necessary. The Content Protection Function 310 performs content protection so that the file is not restored in terminals other than an appropriate terminal. The FA 302 delivers the content-protected at least one file and file attribute to an FD 303 in step 2. The FD 303 may perform a File Aggregation Function 311 for generating a bundle of files to provide BCAST file service for a plurality of files received from a plurality of FAs according to service configuration information such as service schedule, service type and service category. The File Aggregation Function 311 can generate a plurality of files into a plurality of file bundles and provide the file bundles for each individual package. Further, the FD 303 may provide BCAST file service not only with the file bundle but also with one file. The service configuration information, although not shown in FIG. 3, is provided from the BSM shown in FIG. 1.

The FD 303 delivers configuration information such as Quality-of-Service (QoS) requested by the BCAST file service and a necessary data rate to a BDS-SD 304 in step 3, to set up a bearer used for delivery of the BCAST file. Based on the configuration information received from the FD 303, the BDS-SD 304 sets up the bearer to be used by the BCAST file service and then provides the bearer information to be used for file distribution to the FD 303 in response to the configuration information in step 4.

Upon receiving the bearer information, the FD 303 performs a Service Protection Function 312 to protect a bearer over which the BCAST service is to be transmitted, such that subscribers not subscribed to the BCAST file service cannot receive the BCAST file service. When necessary or when the user makes the request during its service subscription, the FD 303 can notify a start of file delivery to an FD-C 305. In the file delivery notification method, the FD 303 can directly notify the start of file delivery to all subscribers in the service area through the BDS for the FD-C 305 in step 5. In an alternative notification method, if the request is sent to the BDS-SD 304 in step 5, the BDS-SD 304 assigns available or appropriate BDS and notifies the start of file delivery to the FD-C 305 in step 6b.

After the notification, the FD 303 delivers the service-protected BCAST file service to an FD-C 305 through the BDS in step 8. The typical technology that can be used for the Service Protection Function 312 can comprise Internet Protocol (IP) Security specified in IETF.

FIG. 4 is a signal flow diagram illustrating an exemplary process of processing a corresponding operation using a broadcast channel when a terminal receiving OMA BCAST file service sends a retransmission request in a mobile broadcast system according to an embodiment of the present invention. FIG. 4 illustrates another example in which OMA BCAST file service is transmitted over a broadcast channel. The retransmission is performed when repairing is achieved because terminals have failed to receive the transmitted OMA BCAST file service, or when a particular BCAST file service is transmitted to a previously known subscriber. In FIG. 4, the BSD/A, BDS-SD, and terminal perform the functions substantially as described in Table 1, and the FA 403 and FD-C 405 are the entities described in the File Distribution Architecture.

Referring to FIG. 4, the FD-C 405 sends a retransmission request for all or portion of a file to an FD 403 in step 1. That is, in embodiments of the present invention, the terminal can receive all or portion of the retransmitted file. When sending a retransmission request for all of the files, the FD-C 405 may include in the retransmission request the file identifiers used for identifying the files or the transmission identifiers for the files used for the delivery of the files, and allow the FD 403 to determine for which file the FD-C 405 sent the retransmission request. When sending a retransmission request for some of the files, the FD-C 405 may include in the retransmission request the identifiers used for identifying some of the files to allow the FD 403 to distinguish the some of the files. The identifiers used for identifying some of the files can comprise session identifiers used for identifying the some of the files during delivery of the files, or identifiers for blocked files when the files are blocked before being delivered. The identifiers used for identifying the some of the files may also include identifiers for locations of the terminals during the retransmission request so that the FD 403 can refer to them.

The FD 403 responds to the request from the FD-C 405 in step 2. The response to the request is optional. In the description of FIG. 4, the FD 403 performs retransmission for all or portion of the file using a broadcast channel in response to the request of the terminal.

After receiving the user's request, the FD 403 can determine whether it will use an interaction channel or a broadcast channel for the file delivery. It is assumed for example in FIG. 4 that the FD 403 determines to use the broadcast channel.

The FD 403 selects a configuration of the corresponding files and a file transmission area according to locations of the terminals in step 411. Thereafter, the FD 403 sends a message for requesting assignment of a bearer for file delivery to a BDS-SD 404 in step 3. In order to determine the file transmission area according to locations of the terminals, the message may include therein location information of the area where the terminal is located during the user's request in step 1. The location information can comprise area identifiers set in BDS or area identifiers set in OMA BCAST. The BDS-SD 404 delivers information and attribute for an available bearer to the FD 403 in response to the corresponding request in step 4. However, the BDS-SD 404 may deny the request when it has no resource for the bearer assignment.

Upon receiving the information and attribute for the bearer from the BDS-SD 404, the FD 403 performs a Service Protection Function 412 for bearer protection based on the received information. Thereafter, the FD 403 starts retransmission for the requested files through the corresponding BDS in step 5.

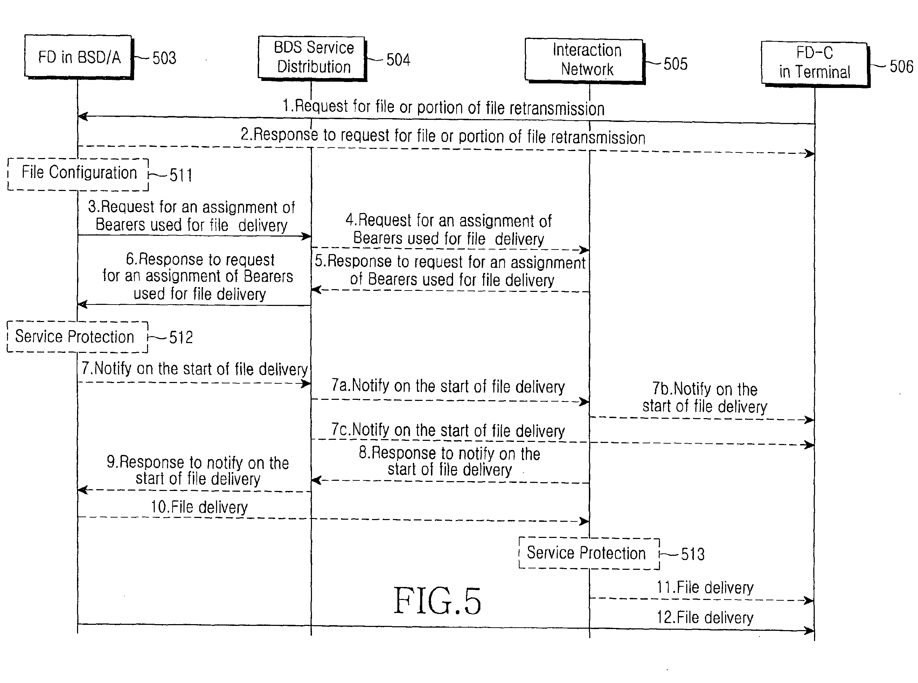

FIG. 5 is a signal flow diagram illustrating an exemplary process of processing a corresponding operation using an interaction channel when a terminal receiving OMA BCAST file service sends a retransmission request in a mobile broadcast system according to an embodiment of the present invention. It is assumed herein that the BSD/A, BDS-SD, interaction network, and terminal perform the functions substantially as described in Table 1, and the FD and FD-C perform the functions substantially as described in the File Distribution Architecture.

Referring to FIG. 5, an FD-C 506 sends a message for requesting retransmission of all or portion of a file to an FD 503 using an interaction channel in step 1. A format of the request message can be equal to that described with reference to FIG. 4. That is, the request message comprises at least file information and location information. Upon receiving the request message, the FD 503 sends a response to the request to the terminal in step 2. However, the response to the request is optional. When sending no response to the request, the FD-C 506 can recognize acceptance of its own request by the FD 503, as it is aware of the delivery start of all or portion of the file.

After receiving the retransmission request, the FD 503 fully or partially configures the corresponding file in step 511. Thereafter, the FD 503 sends an assignment request for a bearer for file delivery to a BDS-SD 504 in step 3. The BDS-SD 504 sends an assignment request for the bearer used for file delivery to an interaction network 505 in step 4. The interaction network 505 determines a bearer based on the request and delivers the determined bearer information to the BDS-SD 504 in step 5. Thereafter, the BDS-SD 504 finally delivers information and attribute for an available bearer to the FD 503 in step 6. The FD 503 can perform a Service Protection Function 512 for bearer protection based on the corresponding information.

Thereafter, the BDS-SD 504 can send a notification message indicating the start of file delivery to the FD-C 506. In this case, the FD 503 first sends a notification message indicating the start of the file delivery to the BDS-SD 504 in step 7. There are two possible methods for sending the notification message to the FD-C 506. In a first method, upon receiving the notification message, the BDS-SD 504 forwards the notification message to the interaction network 505 in step 7a, and the interaction network 505 forwards the notification message to the FD-C 506 in step 7b. In a second method, upon receiving the notification message, the BDS-SD 504 directly forwards the notification message to the FD-C 506 in step 7c. The interaction network 505 sends a response message to the BDS-SD 504 in response to the notification message in step 8. Upon receiving the response message, the BDS-SD 504 forwards the response message to the FD 503 in step 9. Thereafter, the FD 503 delivers a retransmission file to the FD-C 506 over an interaction channel.

There are two possible methods for delivering the retransmission file. In a first method, the FD 503 delivers the retransmission file to the interaction network 505 in step 10, and then the interaction network 505 performs a Service Protection Function 513 on the retransmission file and delivers the resultant retransmission file to the FD-C 506 over an interaction channel in step 11. In a second method, the FD 503 directly delivers the retransmission file to the FD-C 506 in step 12.

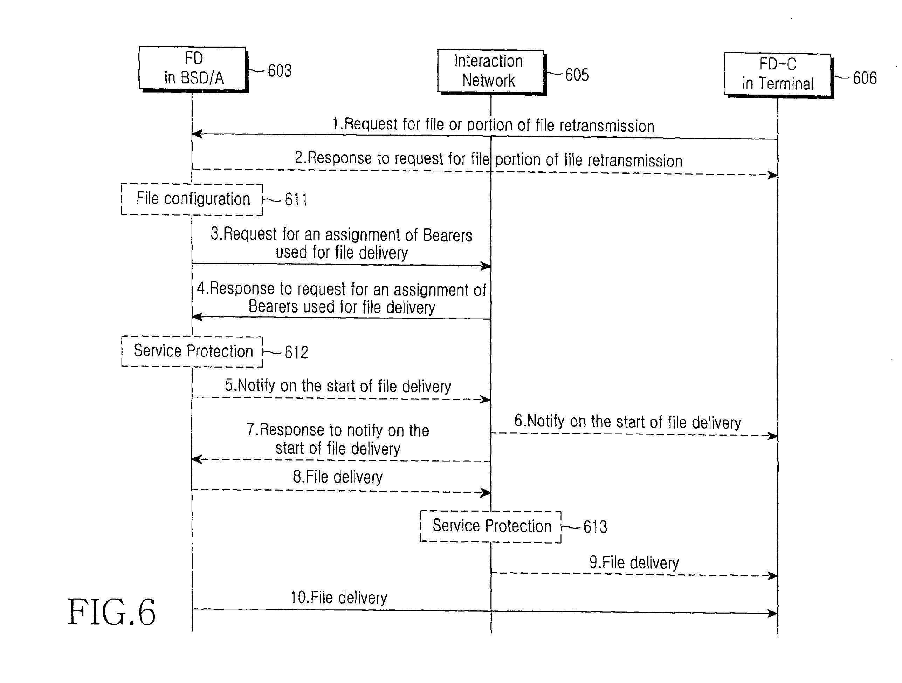

FIG. 6 is a signal flow diagram illustrating another exemplary process of processing a corresponding operation using an interaction channel when a terminal receiving OMA BCAST file service sends a retransmission request in a mobile broadcast system according to an embodiment of the present invention. It is assumed for example herein that the BSD/A, interaction network, and terminal perform the functions substantially as described in Table 1, and the FD and FD-C perform the functions substantially as described in the File Distribution Architecture.

Referring to FIG. 6, an FD-C 606 sends a message for requesting retransmission of all or portion of a file to an FD 603 in step 1. Upon receiving the request message, the FD 603 sends a response message to the FD-C 606 in response to the request message in step 2. Sending the response message to the FD-C 606 is optional according to the system. Upon receiving the retransmission request, the FD 603 configures a corresponding file in step 611. Thereafter, the FD 603 sends a request for assignment of a bearer to be used for file delivery to an interaction network 605 in step 3. The interaction network 605 detects an available bearer and delivers information on an assigned bearer to the FD 603 in step 4. Upon receiving the bearer information, the FD 603 performs a Service Protection Function 612 for bearer protection based on the bearer information.

After performing the Service Protection Function 612, the FD 603 can send a notification message indicating the start of file delivery to the FD-C 606. The FD 603 sends the notification message to the FD-C 606 via the interaction network 605 in steps 5 and 6. The interaction network 605 sends a response message to the FD 603 in response to the notification message in step 7.

There are two possible methods for delivering the service-protected file after sending the notification message. In a first method, the FD 603 delivers a retransmission file to the interaction network 605 in step 8. Thereafter, the interaction network 605 performs a Service Protection Function 613 on the retransmission file for an interaction channel, and delivers the corresponding retransmission file to the FD-C 606 in step 9. In a second method, the FD 603 directly delivers the service-protected retransmission file to the FD-C 606 in step 10.

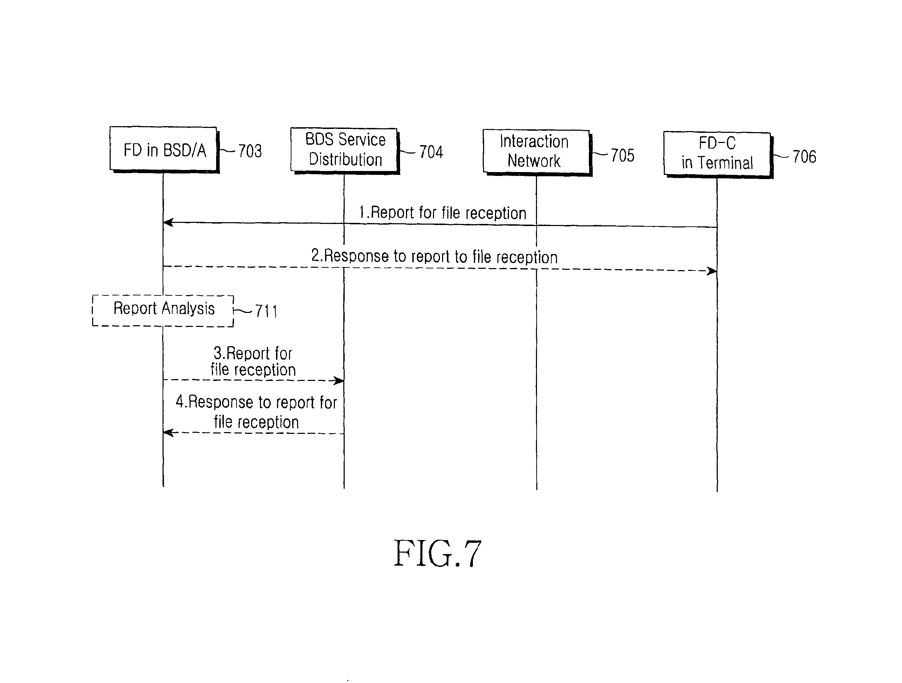

FIG. 7 is a signal flow diagram illustrating an exemplary terminal report process in a mobile broadcast system, wherein the terminal report is received at an FD in a BSD/A, according to an embodiment of the present invention. It is assumed for example herein that the BSD/A, BDS-SD, interaction network, and terminal perform the functions substantially as described in Table 1, and the FD and FD-C perform the functions substantially as described in the File Distribution Architecture.

Referring to FIG. 7, an FD-C 706 sends a report for reception of OMA BCAST file service to an FD 703 in a BSD/A via an interaction network 705 in step 1. Upon receiving the report, the FD 703 sends a response indicating the receipt of the report to the FD-C 706 in step 2. The response to the report is optional according to the system. The contents of the report can comprise various information such as the quality of the OMA BCAST file service. The quality can comprise data regarding an IP packet error rate or a file block error.

Upon receiving the report, the FD 703 analyzes the received report in step 711. Thereafter, the FD 703 delivers the analysis result of the report to a BDS-SD 704 in step 3. Based on the analysis result of the report, the BDS-SD 704 determines whether an error correction scheme used for delivering the OMA BCAST file service in the BDS is appropriate and whether transmission power assigned for the file service is appropriate, and if inappropriate, can change the transmission power for the file service during retransmission and/or for use even during delivery of another file service.

Upon receiving the report, the BDS-SD 704 sends a response message in response to the report in step 4. Sending the response to the report is optional according to the system.

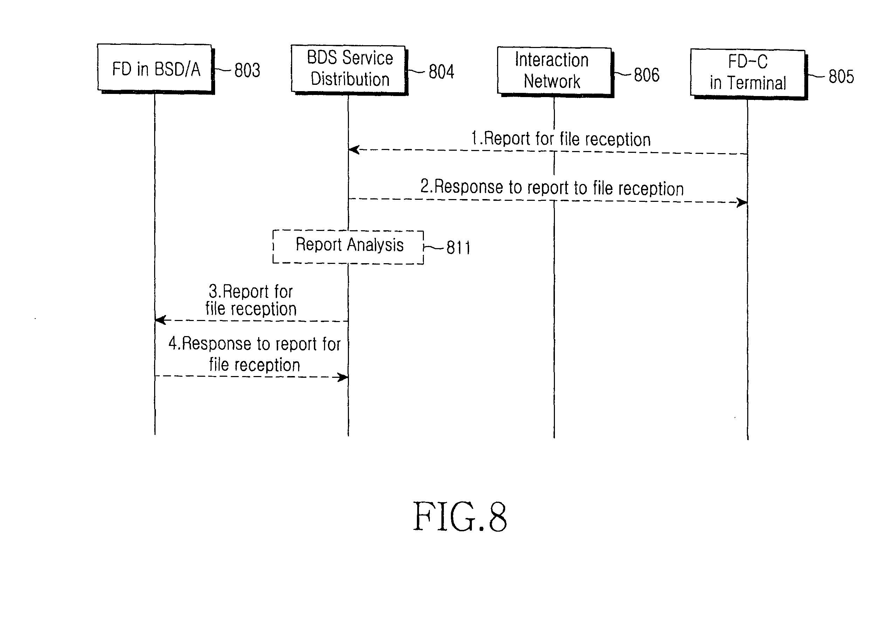

FIG. 8 is a signal flow diagram illustrating another exemplary terminal report process in a mobile broadcast system, wherein the terminal report is received at a BDS-SD 804, according to an embodiment of the present invention. It is assumed for example herein that the BSD/A, BDS-SD, interaction network, and terminal perform the functions substantially as described in Table 1, and the FD and FD-C perform the functions substantially as described in the File Distribution Architecture.

Referring to FIG. 8, an FD-C 805 sends a report for the file reception to a BDS-SD 804 via an interaction network 806 in step 1. Thereafter, the BDS-SD 804 may send a response indicating the receipt of the report to the FD-C 805 in step 2. Sending the response indicating the receipt of the report is optional according to the system. The contents of the report can comprise various information such as the quality of the OMA BCAST file service. The quality can comprise data regarding an IP packet error rate or a file block error.

Upon receiving the report, the BDS-SD 804 analyzes the received report in step 811, and then can deliver the reception report to an FD 803 in a BSD/A in step 3.

Based on the received report, the FD 803 determines whether a forward error correction scheme applied to the OMA BCAST file service is appropriate, and if inappropriate, can determine to use an error correction scheme with a higher performance.

Upon receiving the report, the FD 803 sends a response message to the report in step 4. Sending the response message to the report is optional according to the system.

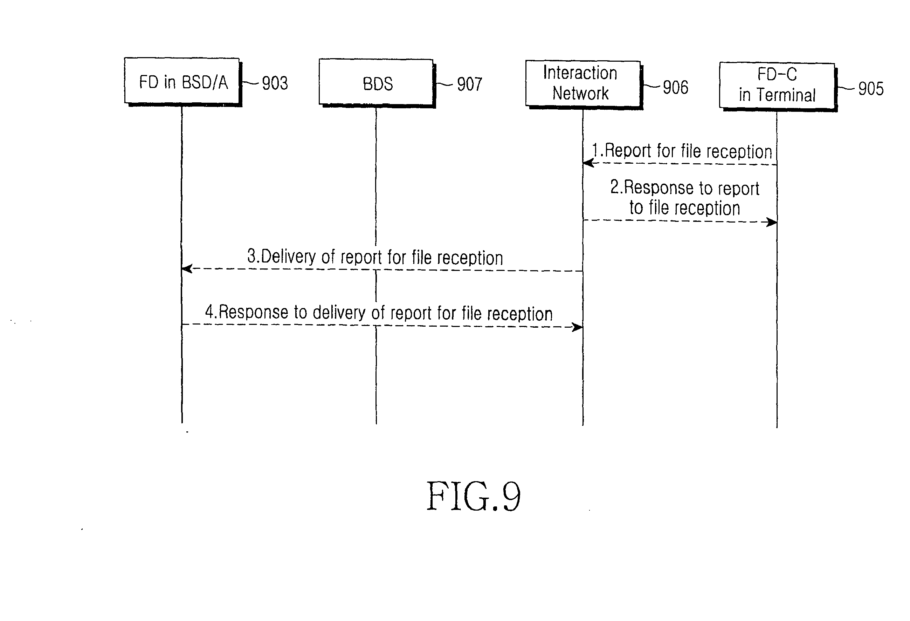

FIG. 9 is a signal flow diagram illustrating another exemplary terminal report process in a mobile broadcast system, wherein the terminal report is received at an interaction network, according to an embodiment of the present invention. It is assumed for example herein that the BSD/A, BDS, interaction network and terminal perform the functions substantially as described in Table 1, and the FD and FD-C perform the functions substantially as described in the File Distribution Architecture.

Referring to FIG. 9, an FD-C 905 sends a report for the file reception to an interaction network 906 in step 1. Thereafter, the interaction network 906 sends a response indicating the receipt of the report for the file reception to the FD-C 905 in step 2. Sending the response to the report is optional according to the system. Upon receiving the report, the interaction network 906 forwards the received report to an FD 903 in step 3. Upon receiving the report, the FD 903 sends a response message to the received report in step 4.

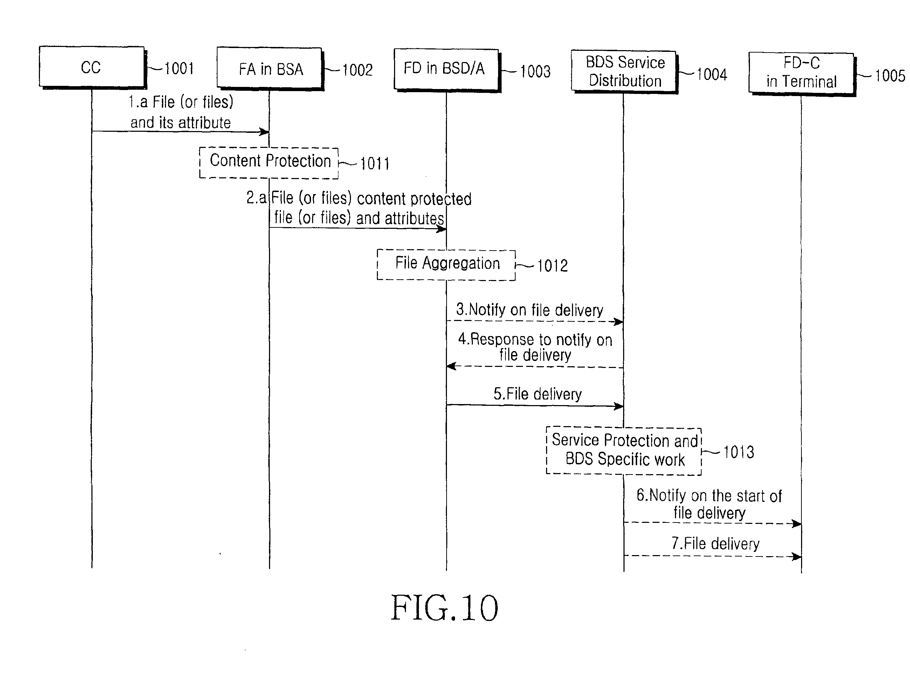

FIG. 10 is a signal flow diagram illustrating an exemplary process of delivering a file over a broadcast channel in a mobile broadcast system according to a second embodiment of the present invention, wherein an FD delivers OMA BCAST file service via a BDS instead of directly delivering the OMA BCAST file service. It is assumed for example that the CC, BSA, BSD/A, BDS-SD, and terminal perform the functions substantially as described in Table 1, and the FA, FD and FD-C perform the functions substantially as described in the File Distribution Architecture.

Referring to FIG. 10, a Content Creation (CC) 1001 delivers a file attribute to an FA 1002 along with at least one file to provide file distribution service to a terminal in step 1. The FA 1002 performs a Content Protection Function 1011 for the received file. The Content Protection Function has been described in detail with reference to FIG. 3, so a detailed description thereof will be omitted here. The FA 1002 delivers the content-protected at least one file and an attribute value for setting up a bearer for delivery of the file, to an FD 1003 in step 2.

The FD 1003 performs a file aggregation function for generating a bundle of files to provide BCAST file service for a plurality of files received from a plurality of FAs according to service configuration information in step 1012. As described with reference to FIG. 3, the FD 1003 can provide BCAST file service in the form of one file or a bundle of files. The service configuration information is received from a BSM. The FD 1003 can notify of the start of the delivery of the BCAST file to a BDS-SD 1004 when necessary. In this case, before the file delivery, the FD 1003 notifies the file delivery to the BDS-SD 1004 in step 3. Then the BDS-SD 1004 sends a response message to the notification to the FD 1003 in step 4. Sending the response message to the notification is optional according to the system.

Upon receiving the response to the notification, the FD 1003 delivers an intended BCAST file to the BDS-SD 1004 in step 5. Upon receiving the BCAST file, the BDS-SD 1004 performs a service protection function and a BDS-specific task in step 1013. For example, the BDS-specific task comprises a task for changing its format to be suitable for the BDS. Thereafter, the BDS-SD 1004 notifies of the start of file delivery in step 6, and delivers the file to an FD-C 1005 in step 7.

As can be understood from the foregoing description, the file distribution method according to embodiments of the present invention defines a message sequence chart, thereby enabling accurate file delivery. In addition, embodiments of the present invention provide a specific retransmission and report method for the case where a terminal fails to normally receive a file due to an error, thereby making it possible to efficiently process the file.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for providing a broadcast service (BCAST) in a mobile broadcast system that receives contents of broadcast services from a content creation and provides the broadcast services to at least one terminal or at least one group of terminals via one of a broadcast distribution system (BDS) and an interaction network, the method comprising the steps of:
(a) receiving, by a file application function (FA), at least one file to be provided to at least one terminal and attribute information for the file, from the content creation, and delivering the received file and attribute information to a file delivery function (FD) in a BCAST service distribution/adaptation (BSD/A);
(b) generating, by the FD, a BCAST file comprising the at least one file or one bundle of files;
(c) negotiating, by the FD, with a BDS service distribution (BDS-SD) that controls the BDS and the interaction network, using attribute information for the BCAST file to set up a bearer for delivering the generated BCAST file; and
(d) after completion of the setting up of the bearer, delivering by the FD, the BCAST file to a terminal subscribed to the broadcast service.

2. The method of claim 1, wherein the step (a) further comprises the step of performing, by the FA, content protection on the at least one file received from the content creation.

3. The method of claim 1, wherein the step (c) comprises the steps of:
sending, by the FD, a request for bearer assignment to the BDS-SD based on the attribute information; and
setting up, by the BDS-SD, a bearer and sending a response to the request to the FD.

4. The method of claim 1, wherein the step (a) further comprises the step of providing, by the FD, notification of a delivery start of the BCAST file to the terminal subscribed to the broadcast service.

5. The method of claim 1, wherein the step (a) further comprises the step of providing, by the FD, notification of a delivery start of the BCAST file to BDS-SD.

6. The method of claim 1, wherein the step (a) further comprises the step of:
after completion of the setting up of the bearer, performing, by the FD, service protection on the bearer.

7. The method of claim 1, wherein the step (b) further comprises the step of:
generating, by the FD, at least one bundle of files using the at least one received file based on service configuration information of a file transmitted from a BCAST subscription management (BSM) that manages subscriber information of the terminal.

8. A method for providing a broadcast service (BCAST) in a mobile broadcast system that receives contents of broadcast services from a content creation and provides the broadcast services to at least one terminal or at least one group of terminals via one of a broadcast distribution system (BDS) and an interaction network, the method comprising the steps of:
(a) receiving, by a file application function (FA), at least one file to be provided to at least one terminal and attribute information for the file, from the content creation, and delivering the received file and attribute information to a file delivery function (FD) in a BCAST service distribution/adaptation (BSD/A);
(b) generating a BCAST file comprising the at least one file or one bundle of files;
(c) delivering, by the FD, the BCAST file to a BDS service distribution (BDS-SD) that controls the BDS and the interaction network; and
(d) delivering, by the BDS-SD, the BCAST file to a file deliver client function (FD-C) of a terminal subscribed to the broadcast service over at least one of a broadcast channel and an interaction channel.

9. The method of claim 8, further comprising the step of performing, by the FA, content protection on the at least one file received from the content creation.

10. The method of claim 8, further comprising the step of, after completion of setting up the bearer, performing, by the BDS-SD, service protection on the bearer.

11. The method of claim 8, wherein the step (b) further comprises the step of:
generating, by the FD, at least one bundle of files using the at least one received file based on service configuration information of a file transmitted from a BCAST subscription management (BSM) that manages subscriber information of the terminal.

12. A method for repairing a damaged broadcast service (BCAST) file delivered from a terminal in a mobile broadcast system that receives contents of broadcast services from a content creation and provides the broadcast services to at least one terminal or at least one group of terminals via one of a broadcast distribution system (BDS) and an interaction network, the method comprising the steps of:
(a) sending, by a file deliver client function (FD-C) of the terminal, a retransmission request message comprising information on all or portion of the BCAST file;
(b) reconfiguring, by the FD, a BCAST file including all or portion of the requested BCAST file based on the received retransmission request message; and
(c) negotiating, by the FD, with a BDS service distribution (BDS-SD) that controls the BDS and the interaction network, to set up a bearer for delivering the BCAST file, and delivering the BCAST file over the set bearer.

13. The method of claim 12, wherein the retransmission request message comprises location information of the terminal.

14. The method of claim 13, wherein the location information comprises an area identifier set in the BDS or an area identifier set in the broadcast service.

15. The method of claim 14, wherein the FD is further configured to select a transmission area before delivering the BCAST file to the terminal.

16. The method of claim 12, wherein the step (a) further comprises the step of sending, by the FD, a response to the retransmission request message to the FD-C of the terminal.

17. The method of claim 12, wherein the step (c) comprises the steps of:
after completion of the setting up of the bearer, performing, by the FD, service protection on the bearer; and
delivering the service-protected BCAST file to the FD-C over a broadcast channel.

18. The method of claim 12, wherein the step (c) comprises the steps of:
after completion of the setting up of the bearer, delivering, by the FD, the BCAST file to the interaction network;
upon receiving the BCAST file, performing, by the interaction network, service protection on the bearer; and
delivering, by the interaction network, the service-protected BCAST file to the FD-C.

19. A terminal report method for a broadcast service (BCAST) file delivered to a terminal in a mobile broadcast system that receives contents of broadcast services from a content creation and provides the broadcast services to at least one terminal or at least one group of terminals via one of a broadcast distribution system (BDS) and an interaction network, the method comprising the steps of:
(a) delivering, by a file deliver client function (FD-C) of the terminal, a report comprising quality information for the BCAST file to a file delivery function (FD) in a BCAST service distribution/adaptation (BSD/A);
(b) analyzing, by the FD, the received report and delivering the analysis result to a BDS service distribution (BDS-SD) that controls the BDS and the interaction network; and
(c) improving, by the BDS-SD, channel quality based on the analysis result.

20. The method of claim 19, further comprising the step of, after the step (a), sending, by the FD, a response to the report to the FD-C.

21. The method of claim 19, wherein the step (c) comprises the step of checking whether forward error correction (FEC) and transmission power are appropriate.

22. A terminal report method for a broadcast service (BCAST) file delivered to a terminal in a mobile broadcast system that receives contents of broadcast services from a content creation and provides the broadcast services to at least one terminal or at least one group of terminals via one of a broadcast distribution system (BDS) and an interaction network, the method comprising the steps of:
(a) delivering, by a file deliver client function (FD-C) of the terminal, a report comprising quality information for the BCAST file to a BDS service distribution (BDS-SD) that controls the interaction network;
(b) analyzing, by the BDS-SD, the received report and delivering the analysis result to a file delivery function (FD) in a BCAST service distribution/adaptation (BSD/A); and
(c) improving, by the FD, channel quality based on the analysis result.

23. The method of claim 22, wherein the step (c) comprises the step of checking whether forward error correction (FEC) and transmission power are appropriate.

24. A method for providing a broadcast service (BCAST) in a mobile broadcast system that receives contents of broadcast services from a content creation and provides the broadcast services to at least one terminal or at least one group of terminals via one of a broadcast distribution system (BDS) and an interaction network, the method comprising the steps of:
(a) receiving, by a file application function (FA) that provides a file attribute related to the broadcast service, at least one file to be provided to at least one terminal and attribute information for the file, from the content creation, and performing content protection on the at least one file;
(b) delivering, by the FA, the content-protected at least one file and the attribute information for determining a bearer for transmitting the file, to a file delivery function (FD) in a BCAST service distribution/adaptation (BSD/A);
(c) generating, by the FD, at least one bundle of files by aggregating the at least one received file based on service configuration information of a file transmitted from a BCAST subscription management (BSM) that manages subscriber information of the terminal, and generating a BCAST file comprising the at least one file or one bundle of files;
(d) providing, by the FD, notification of a delivery start of the BCAST file and delivering the BCAST file to a BDS service distribution (BDS-SD) that controls the BDS and the interaction network;
(e) upon receiving the BCAST file, performing, by the BDS-SD, service protection on the bearer whereby a terminal not subscribed to the broadcast service cannot receive the BCAST file; and
(f) after providing notification of the delivery start of the BCAST file, delivering the BCAST file to a file deliver client function (FD-C) of a terminal subscribed to the broadcast service over a broadcast channel or an interaction channel.

25. A mobile broadcast system that receives contents of broadcast services (BCAST) from a content creation and provides the broadcast services to at least one terminal or at least one group of terminals via one of a broadcast distribution system (BDS) and an interaction network, the system comprising:
a file application function (FA) for receiving at least one file to be provided to at least one terminal and attribute information for the file from the content creation, and delivering the content-protected at least one file and the attribute information for the file to the terminal;
a file delivery function (FD) for generating a BCAST file comprising the at least one file or one bundle of files, and delivering the BCAST file for the file to the terminal; and
a BDS service distribution (BDS-SD) for receiving the BCAST file, and delivering the BCAST file to a file deliver client function (FD-C) of a terminal subscribed to the broadcast service over at least one of a broadcast channel and an interaction channel.

26. The mobile broadcast system of claim 25, wherein the FA is configured to perform content protection on the at least one file received from the content creation.

27. The mobile broadcast system of claim 25, wherein the BDS-SD is configured to perform service protection on a bearer used for file delivery after completing the bearer.

28. The mobile broadcast system of claim 25, wherein the FD is configured to generate at least one bundle of files using the at least one received file based on service configuration information of a file transmitted from a BCAST subscription management (BSM) that manages subscriber information of the terminal.

29. The mobile broadcast system of claim 25, wherein the FD is configured to deliver the BCAST file over a broadcast channel.

30. The mobile broadcast system of claim 25, wherein the BDS-SD is configured to set up a bearer to the interaction network as a channel for delivering the BCAST file.

31. A mobile broadcast system that receives contents of broadcast services (BCAST) from a content creation and provides the broadcast services to at least one terminal or at least one group of terminals via one of a broadcast distribution system (BDS) and an interaction network, the system comprising:
a file delivery function (FD) for, upon receiving a retransmission request message comprising a retransmission request for all or portion of a damaged BCAST file from the terminal, reconfiguring a BCAST file including all or portion of the requested BCAST file based on the retransmission request message, negotiating with a bearer setup means using a bearer setup request message for requesting setup of a bearer for delivering the BCAST file, and delivering the BCAST file to the terminal over a bearer set up after the bearer negotiation; and
a BDS service distribution (BDS-SD) for, upon receiving the bearer setup request message from the FD, assigning a bearer for delivering the BCAST file and delivering a response over the broadcast channel to the bearer setup request message to the FD.

32. The mobile broadcast system of claim 31, wherein the location information comprises an area identifier set in the BDS or an area identifier set in the broadcast service.

33. The method of claim 31, wherein the retransmission request message comprises location information of the terminal.

34. The method of claim 33, wherein the location information comprises an area identifier set in the BDS or an area identifier set in the broadcast service.

35. The method of claim 34, wherein the FD is configured to select a transmission area before delivering the BCAST file to the terminal.

36. The method of claim 31, wherein the FD is configured to send a response to the terminal for the retransmission request message.

37. A mobile broadcast system that receives contents of broadcast services (BCAST) from a content creation and provides the broadcast services to at least one terminal or at least one group of terminals via one of a broadcast distribution system (BDS) and an interaction network, the system comprising:
a file delivery function (FD) for, upon receiving a retransmission request message comprising a retransmission request for all or portion of a damaged BCAST file from the terminal, reconfiguring a BCAST file including all or portion of the requested BCAST file based on the retransmission request message, selecting a transmission area of the terminal, and delivering the BCAST file to the terminal over the bearer set up; and
a BDS service distribution (BDS-SD) for, upon receiving the bearer setup request message from the FD, assigning a bearer for delivering the BCAST file and delivering a response to the bearer setup request message to the FD.

38. The method of claim 37, further comprising an interaction network for negotiating with the BDS-SD for setting up the bearer used for the BCAST file delivery.

39. The method of claim 37, wherein the FD is configured to provide notification of a delivery start of the BCAST file to the BDS-SD.

40. The method of claim 37, wherein the interaction network is configured to provide notification of a delivery start of the BCAST file to the terminal subscribed to the broadcast service over an interactive channel.

41. A method for providing a broadcast service (BCAST) in a mobile broadcast system that receives contents of broadcast services from a content creation and provides the broadcast services to at least one terminal or at least one group of terminals via one of a broadcast distribution system (BDS) and an interaction network, the method comprising the steps of:
(a) receiving, by a file application function (FA) that provides a file attribute related to the broadcast service, at least one file to be provided to at least one terminal and attribute information for the file from the content creation, and performing content protection on the at least one received file;
(b) delivering, by the FA, the content-protected at least one file and the attribute information for the file to a file delivery function (FD) in a BCAST service distribution/adaptation (BSD/A);
(c) generating, by the FD, at least one bundle of files by aggregating the at least one received file based on service configuration information of a file transmitted from a BCAST subscription management (BSM) that manages subscriber information of the terminal, and generating a BCAST file comprising the at least one file or one bundle of files;
(d) negotiating, by the FD, with a BDS service distribution (BDS-SD) that controls the BDS and the interaction network using configuration information for the BCAST file to set up a bearer for delivering the generated BCAST file;
(e) after completion of setting up the bearer, performing, by the FD, service protection on the bearer whereby a terminal not subscribed to the broadcast service cannot receive the BCAST file;
(f) providing, by the FD, notification of a delivery start of the BCAST file to a file deliver client function (FD-C) of a terminal subscribed to the broadcast service; and
(g) delivering, by the FD, the BCAST file to the FD-C of the terminal subscribed to the broadcast service over a broadcast channel.

42. The method of claim 41, wherein the step (d) comprises the steps of:
sending, by the FD, a request for assigmnent of a bearer to the BDS-SD based on the configuration information; and
setting up, by the BDS-SD, a bearer and sending a response message to the FD.

43. The method of claim 41, further comprising the steps of:
if all or portion of the received BCAST file is lost in the terminal, receiving, by an FD-C in the terminal, a retransmission request message comprising information on all or portion of the BCAST file to the FD and receiving a response thereto;
generating, by the FD, a BCAST file to be retransmitted with all or portion of the requested BCAST file based on the received retransmission request message, and selecting a transmission area;
negotiating, by the FD, with the BDS-SD to set up a bearer for delivering the BCAST file; and
after the setting up of the bearer, delivering, by the FD, the BCAST file to the terminal over the broadcast channel or an interaction channel.

44. The method of claim 43, wherein the retransmission request message comprises location information of the terminal.

45. A mobile broadcast system that receives contents of broadcast services (BCAST) from a content creation and provides the broadcast services to at least one terminal or at least one group of terminals via one of a broadcast distribution system (BDS) and an interaction network, the system comprising:
a file application function (FA) for receiving at least one file to be provided to at least one terminal and attribute information for the file, from the content creation, and delivering the received file and attribute information to a file delivery for the file to the terminal;
a file delivery function (FD) for generating a BCAST file comprising the at least one file or one bundle of files, and delivering the BCAST file through a bearer to a terminal subscribed to the broadcast service; and
a BDS service distribution (BDS-SD) for negotiating with the FD to set up the bearer.

46. The mobile broadcast system of claim 45, wherein the FA is configured to perform content protection on the at least one file received from the content creation.

47. The mobile broadcast system of claim 45, wherein the BDS-SD is configured to receive a request for an assignment of a bearer used for the BCAST file delivery from the FD, and send a response for the request after completing the bearer.

48. The mobile broadcast system of claim 45, wherein the FD is configured to provide notification of a delivery start of the BCAST file to the terminal subscribed to the broadcast service.

49. The mobile broadcast system of claim 45, wherein the FD is configured to provide notification of a delivery start of the BCAST file to BDS-SD.

50. The mobile broadcast system of claim 45, wherein the FD is configured to perform service protection on the bearer after completion of the setting up of the bearer.

51. The mobile broadcast system of claim 45, wherein the FD is configured to generate at least one bundle of files using the at least one received file based on service configuration information of a file transmitted from a BCAST subscription management (BSM) that manages subscriber information of the terminal.
